# EUROPEAN PATENT SPECIFICATION

(11) **EP 3 451 607 B1**
(45) Date of publication and mention of the grant of the patent: **17.07.2019**
(21) Application number: 17188717.7
(22) Date of filing: 31.08.2017
(51) Int. Cl.: H04L 29/06

(54) **METHODS AND DEVICES FOR SECURE COMMUNICATION BETWEEN NETWORK FUNCTIONS OF A COMMUNICATION NETWORK**
METHODEN UND GERÄTE FÜR SICHERE KOMMUNIKATION ZWISCHEN NETZWERK-FUNKTIONEN IN EINEM KOMMUNIKATIONS-NETZWERK
METHODES ET DISPOSITIFS POUR UNE COMMUNICATION SECURISEE ENTRE DES FONCTIONS DE RÉSEAU DANS UNE RESEAU DE COMMUNICATION

(43) Date of publication of application: 06.03.2019
(73) Proprietor: Deutsche Telekom AG, 53113 Bonn (DE)
(72) Inventor: Einsiedler, Hans Joachim, 13189 Berlin (DE); Hänsge, Kay, 13086 Berlin (DE); Szczepanski, Roman, 10713 Berlin (DE); von Hugo, Dirk, 64285 Darmstadt (DE)
(74) Representative: Patentship Patentanwaltsgesellschaft mbH

(56) References cited:
- US-A1- 2009 061 912
- US-A1- 2016 127 333
- Anonymous: "Pretty Good Privacy - Wikipedia", , 27 August 2017 (2017-08-27), XP055411186, Retrieved from the Internet: URL:https://en.wikipedia.org/w/index.php?t itle=Pretty_Good_Privacy&oldid=797524574 [retrieved on 2017-09-28]
- PARKER M C ET AL: "CHARISMA: Converged heterogeneous advanced 5G cloud-RAN architecture for intelligent and secure media access", 2016 EUROPEAN CONFERENCE ON NETWORKS AND COMMUNICATIONS (EUCNC), IEEE, 27 June 2016 (2016-06-27), pages 240-244, XP032957218, DOI: 10.1109/EUCNC.2016.7561040 [retrieved on 2016-09-06]

## Description

### TECHNICAL FIELD

In general, the present invention relates to communication networks. More specifically, the present invention relates to methods and devices for communication between network functions of a communication network, in particular a mobile communication network.

### BACKGROUND

In current mobile communication networks, i.e. 4G LTE systems, the core network generally has a static architecture. Control plane network functions and data plane (also referred to as user plane) network functions are provided by the fixed network elements of the core network, such as a Mobility Management Entity (MME), a Serving Gateway (SGW), a PDN Gateway (PGW) and the like. These network elements serve all the network traffic that passes through the Evolved Packet Core (EPC) regardless of the type of services associated with the network traffic. Therefore, on the basis of a 4G system architecture it is generally not possible to enable service-tailored network function provisioning.

In comparison to 4G mobile communication systems, the future 5th Generation mobile technology (5G) will support use cases with an enormous variety of performance attributes, for instance, ultra-reliable communication for mission critical services, eHealth, public safety, real-time vehicle control, tactile Internet, connectivity for drones, and the like. To support services with such a diverse range of requirements, network slices and logical network functions are expected to be among the key building blocks of 5G networks.

Generally, a network slice is implemented on the physical network resources, such as servers, routers, base stations and the like, of a mobile communication network and composed of a collection of logical network functions that support the communication services for particular use cases. These logical network functions are usually implemented in a control plane of a network slice and can be considered to run on one or more virtual machines providing the network slice. In contrast to traditional core networks, which have been designed as a single network architecture supporting a maximum level of connectivity and providing multiple services, network slicing allows networks to be logically separated with each network slice providing customized connectivity, and all network slices can share the same functional components. Network slicing thus significantly increases flexibility and dynamicity of the core network and allows, for instance, implementing an access-agnostic core. Thus, network slicing will be one of the main features for 5G developments and enable provision of service-tailored network functions, aiming especially at vertical integration of industries.

The network functions implemented in a mobile communication network can have different tasks, such as Authentication, Authority & Accounting (AAA) management, mobility management, session management, security management, and the like. However, in order to fulfil these tasks different network functions have to communicate with each other to exchange information, states and the like.

For certain use cases it is foreseeable that the operator of a mobile communication network will implement network slices that include both logical network functions provided by the mobile network operator as well as logical network functions provided by one or more third parties, for instance, a customer of the mobile network operator. As will be appreciated, the inclusion of network functions from different parties in a network slice might lead to security issues, which have not been addressed by the prior art.

US 2016/0127333 A1 discloses methods and devices for secure communication between virtual network functions and/or components of virtual network functions on the basis of a cryptographic key. The virtual network functions are implemented on a respective server. A sender server is configured to establish an encryption tunnel with a target server for securing the communication between a virtual network function implemented on the sender server and a target network function implemented on the target server. Moreover, each server can comprise a trusted execution environment configured to perform various key management operations, such as generating a session key.

In light of the above, there is a need for improved methods and devices for the communication between network functions of a communication network, in particular a 5G communication network.

### SUMMARY

It is an object of the invention to provide improved methods and devices for the communication between network functions of a communication network, in particular a 5G communication network.

The foregoing and other objects are achieved by the subject matter of the independent claims. Further implementation forms are apparent from the dependent claims, the description and the figures.

According to a first aspect the invention relates to a method of distributing content data between network functions in a communication network comprising a plurality of network functions, wherein the method comprises: generating a message including content data for a target network function of the plurality of network functions; encrypting the content data of the message using a first cryptographic key; encrypting the first cryptographic key using a second cryptographic key, wherein the second cryptographic key is associated with the target network function; attaching the encrypted first cryptographic key to the message; and sending the message, including the encrypted content data and the encrypted first cryptographic key, to the plurality of network functions.

Thus, an improved method for secure communication between network functions of a communication network, in particular a 5G communication network, is provided.

In a further embodiment of the first aspect, the plurality of network functions are implemented in a network slice of the communication network.

In a further embodiment of the first aspect, the message comprises metadata, in particular at least one pointer, and wherein the metadata provides information for associating the encrypted content data with the target network function.

In a further embodiment of the first aspect, the second cryptographic key is associated with a group of network functions of the plurality of network functions, wherein the group of network functions comprises the target network function.

In a further embodiment of the first aspect, the steps of encrypting the content data of the message, encrypting the first cryptographic key and attaching the encrypted first cryptographic key are repeated for different content data of the message, wherein for each content data of the message a different first cryptographic key and a different second cryptographic key is used.

In a further embodiment of the first aspect, the step of sending the message is triggered, in response to at least one of the following conditions: the encrypted content data of the message is larger than a predefined threshold value; a predefined time period has lapsed after the generation of the message; encrypted content data of the message has been marked as high-priority content data.

In a further embodiment of the first aspect, the first cryptographic key is a symmetric key and/or the second cryptographic key associated with the target network function is a public cryptographic key of an asymmetric cryptographic key pair associated with the target network function.

According to a second aspect the invention relates to a method of obtaining content data by a target network function in a communication network comprising a plurality of network functions, wherein the method comprises: receiving a message, including encrypted content data and an encrypted first cryptographic key associated with the encrypted content data, wherein the encrypted first cryptographic key has been encrypted using a second cryptographic key associated with the target network function; decrypting the encrypted first cryptographic key using a third cryptographic key associated with the target network function; and decrypting the encrypted content data using the first cryptographic key for obtaining the content data.

Thus, an improved method for secure communication between network functions of a communication network, in particular a 5G communication network, is provided.

In a further embodiment of the second aspect, the third cryptographic key associated with the target network function and the second cryptographic key associated with the target network function are a private cryptographic key and a public cryptographic key of an asymmetric cryptographic key pair associated with the target network function.

In a further embodiment of the second aspect, the method comprises the further step of sending an acknowledgment of receipt message to a source network function, which has sent the message.

In a further embodiment of the second aspect, the method comprises the further steps of extracting metadata from the received message and identifying the encrypted content data of the received message that is associated with the target network function on the basis of the metadata.

In a further embodiment of the second aspect, the first cryptographic key is a symmetric key.

According to a third aspect the invention relates to a communication network comprising a plurality of network functions, wherein the plurality of network functions are configured to distribute content data using the method according to the first aspect and/or the plurality of network functions are configured to obtain content data using the method according to the second aspect.

In a further embodiment of the third aspect, the communication network comprises a network slice, wherein the plurality of network functions are implemented in the network slice of the communication network.

According to a fourth aspect the invention relates to a computer program product comprising program code for performing the method of the first aspect and/or the method of the second aspect when executed on a computer.

Embodiments of the invention can be implemented in hardware and/or software.

### BRIEF DESCRIPTION OF THE DRAWINGS

Further embodiments of the invention will be described with respect to the following figures, wherein:
Fig. 1 shows a diagram illustrating a method of distributing content data between network functions in a communication network according to an embodiment;
Fig. 2 shows a diagram illustrating a method of obtaining content data by a target network function in a communication network comprising a plurality of network functions according to an embodiment;
Fig. 3 shows a schematic diagram of a communication network comprising a plurality of network functions according to an embodiment;
Fig. 4 shows a schematic diagram illustrating the generation of a message by a network function as implemented in embodiments of the invention;
Fig. 5 shows a schematic diagram illustrating a first example of a message exchange between network functions in a communication network according to an embodiment;
Fig. 6 shows a schematic diagram illustrating a second example of a message exchange between network functions in a communication network according to an embodiment; and
Fig. 7 shows a schematic diagram illustrating a third example of a message exchange between network functions in a communication network according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures.

Moreover, in the following detailed description as well as in the claims embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

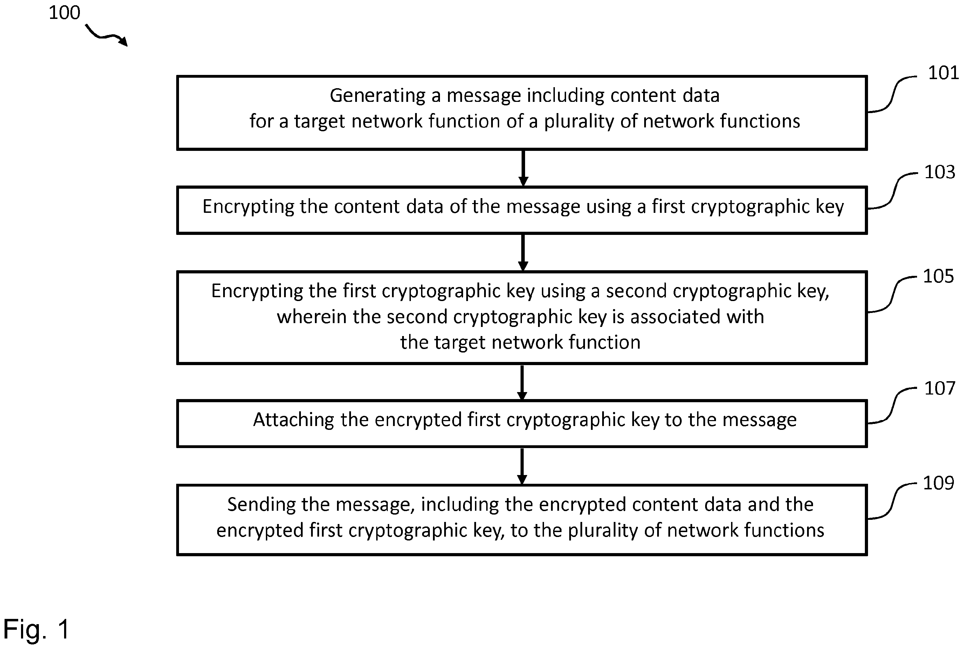

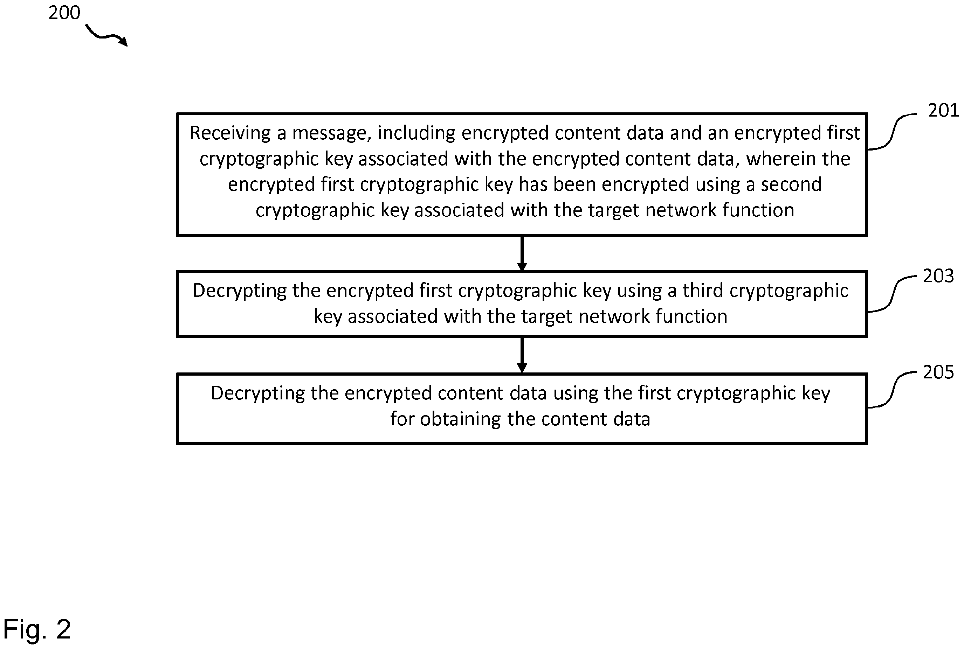

Figure 1 shows a diagram illustrating a method 100 of distributing content data between logical network functions in a communication network according to an embodiment. Figure 2 shows a diagram illustrating a corresponding method 200 of obtaining content data by a target network function in a communication network comprising a plurality of logical network functions according to an embodiment.

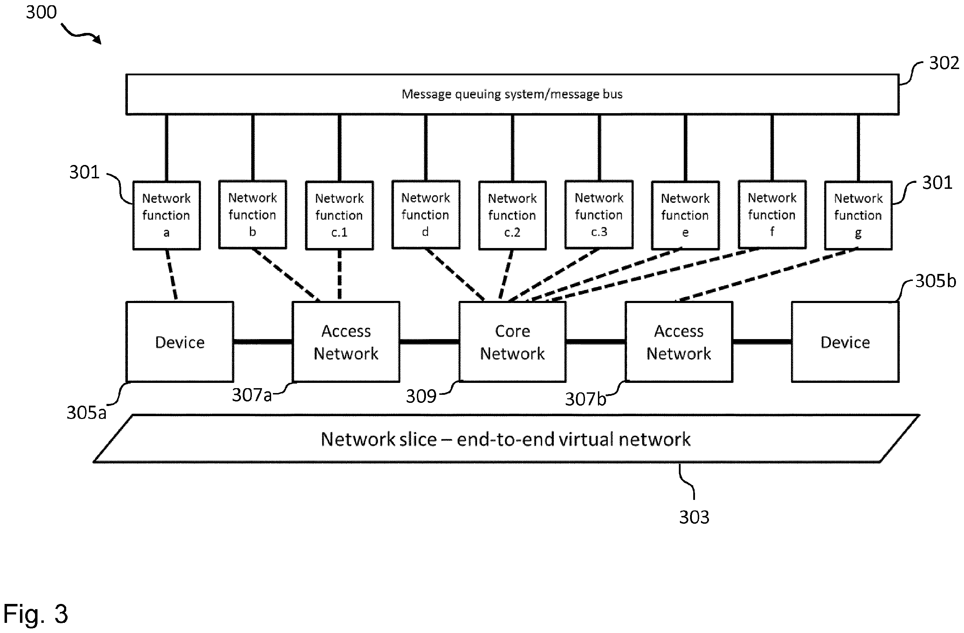

The method 100 illustrated in figure 1 and the method 200 illustrated in figure 2, which will be described in more detail further below, can be implemented in the communication network 300 shown in figure 3. In an embodiment, the communication network 300 is a mobile communication network, in particular a mobile communication network according to the 5G standard.

The communication network 300 shown in figure 3 comprises a plurality of logical network functions 301, which can be configured to provide different services, such as Authentication, Authority & Accounting (AAA) management services, mobility management services, session management services, security management servers, and the like, for allowing a first end device 305a of the communication network 300 to communicate with a second end device 305b thereof. As illustrated in figure 3, the logical network functions 301 can be configured to operate in different parts of the communication network 300. By way of example, the logical network function "NFa" can interact with the first end device 305a of the communication network 300, the logical network functions "NFb", "NFc.1" and "NFg" can operate in respective access networks 307a, 307b of the communication network 300 and the logical network functions "NFd", "NFc.2", "NFc.3", "NFe", "NFf" can operate in a core network 309 of the communication network 300. The access networks 307a, 307b are configured to provide access to the core network 309. In an embodiment, the access networks 307a, 307b are implemented as radio access networks and can comprise a plurality of base stations for allowing the end devices 305a, 305b to access the access networks 307a, 307b.

In an embodiment, several instances of the same logical network function 301 can operate in the same or different parts of the communication network 300, for instance, due to load balancing issues. In the exemplary embodiment shown in figure 3, the logical network functions "NFc.1", "NFc.2" and "NFc.3" could be different instances of the same logical network function "NFc". In an embodiment, some of the plurality of logical network functions 301 can be provided by the operator of the communication network 300 and some can be provided by a third party, for instance, a customer of the mobile network operator.

As illustrated in figure 3, the plurality of logical network functions 301 can be implemented as a part of a network slice 303 of the communication network 300, which can be considered to provide a virtual end-to-end network. In an embodiment, at least some of the plurality of logical network functions 301 can be implemented in a control plane defined by the network slice 303. As will be described in more detail below, embodiments of the invention provide a kind of secure message bus 302 or message queuing system for allowing the plurality of logical network functions 301 to communicate in a secure fashion.

The network architecture for supporting embodiments of the invention, such as the architecture of the communication network 300 shown in figure 3, may be either realized according to Network Function Virtualization (NFV) and Software Defined Networks (SDN) paradigms or may rely on dedicated hardware appliances or entities. The network slice 303 and/or the plurality of network functions 301 may be built upon virtual and/or physical infrastructures, including wireless Access Points (APs), Data Centers, Edge Data Centers or Points of Presence, interconnected by a transport network realized either by legacy connectivity methods or by virtual links, virtual switches and virtual routers controlled by SDN controllers.

As already mentioned above, figure 1 illustrates the steps of an embodiment of a method 100 of distributing content data from a source network function 301, for instance the logical network function "NFa" shown in figure 3, to a target network function 301, for instance the logical network function "NFg" shown in figure 3. The method 100 comprises the following steps, which are performed by the source network function: generating 101 a message including content data for the target network function 301; encrypting 103 the content data of the message using a first cryptographic key; encrypting 105 the first cryptographic key using a second cryptographic key, wherein the second cryptographic key is associated with the target network function; attaching 107 the encrypted first cryptographic key to the message; and sending 109 the message, including the encrypted content data and the encrypted first cryptographic key, to the plurality of network functions 301.

As already mentioned above, figure 2 illustrates the steps of an embodiment of a corresponding method 200 of obtaining content data by the target network function 301 in the communication network 300, for instance the target network function "NFg" shown in figure 3. The method 200 comprises the following steps, which are performed by the target network function 301: receiving 201 a message, including encrypted content data and an encrypted first cryptographic key associated with the encrypted content data, wherein the encrypted first cryptographic key has been encrypted using a second cryptographic key associated with the target network function 301; decrypting 203 the encrypted first cryptographic key using a third cryptographic key associated with the target network function 301; and decrypting 205 the encrypted content data using the first cryptographic key for obtaining the content data. In an embodiment, the method 200 comprises the further step of sending an acknowledgment of receipt message to the source network function 301.

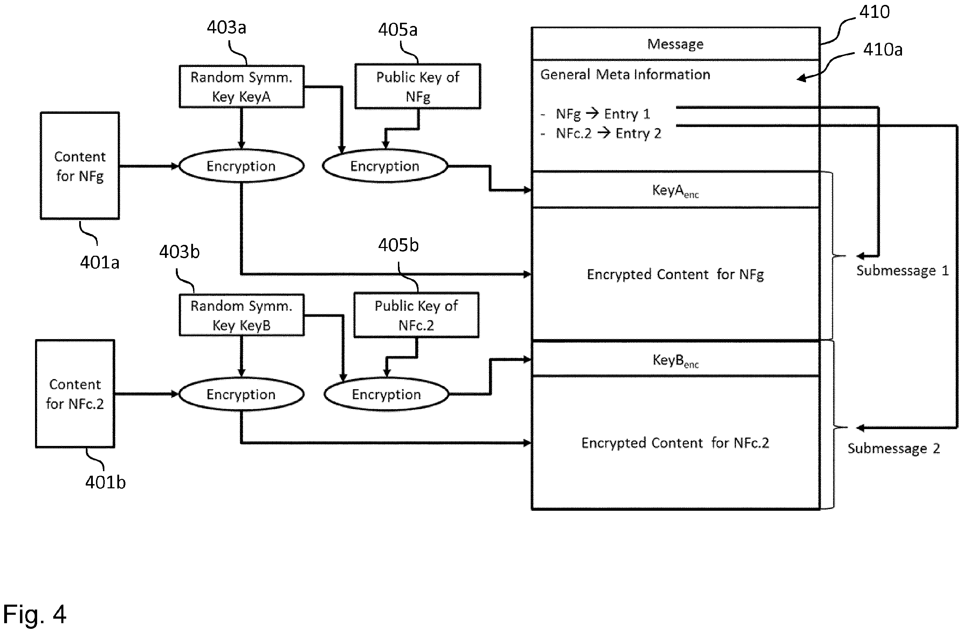

An exemplary embodiment further illustrating the method 100 is shown in figure 4. In the exemplary embodiment shown in figure 4, the source network function 301 wants to provide content data 401a to the target network function "NFg" and further content data 401b to the target network function "NFc.2". The content data 401a intended for the target network function "NFg" is encrypted using a symmetric key "KeyA" 403a. The content data 401b intended for the target network function "NFc.2" is encrypted using a different symmetric key "KeyB" 403b. The symmetric key "KeyA" 403a, which has been used for encrypting the content data intended for the target network function "NFg", is, in turn, encrypted using a further cryptographic key associated with the target network function "NFg", preferably a public key of the target network function "NFg". Likewise, the symmetric key "KeyB" 403b, which has been used for encrypting the content data intended for the target network function "NFc.2", is, in turn, encrypted using a further cryptographic key associated with the target network function "NFc.2", preferably a public key of the target network function "NFc.2".

As illustrated in figure 4, the source network function 301 is configured to generate a message 410 comprising as a first sub-message the encrypted content data intended for the target network function "NFg" as well as the encrypted symmetric key "KeyA" and as a second sub-message the encrypted content data intended for the target network function "NFc.2" as well as the encrypted symmetric key "KeyB". The message 410 comprises metadata 410a, in particular one or more pointers, providing information for associating the encrypted content data with the intended target network function. The metadata 401a is readable by all logical network functions 301. In the exemplary embodiment sown in figure 4, the metadata 410a comprises a first pointer "NFg -> Entry 1" for informing the target network function "NFg" about the location of the encrypted content data intended therefore within the message 401 and a second pointer "NFc.2 -> Entry 2" for informing the target network function "NFc.2" about the location of the encrypted content data intended therefore within the message 401.

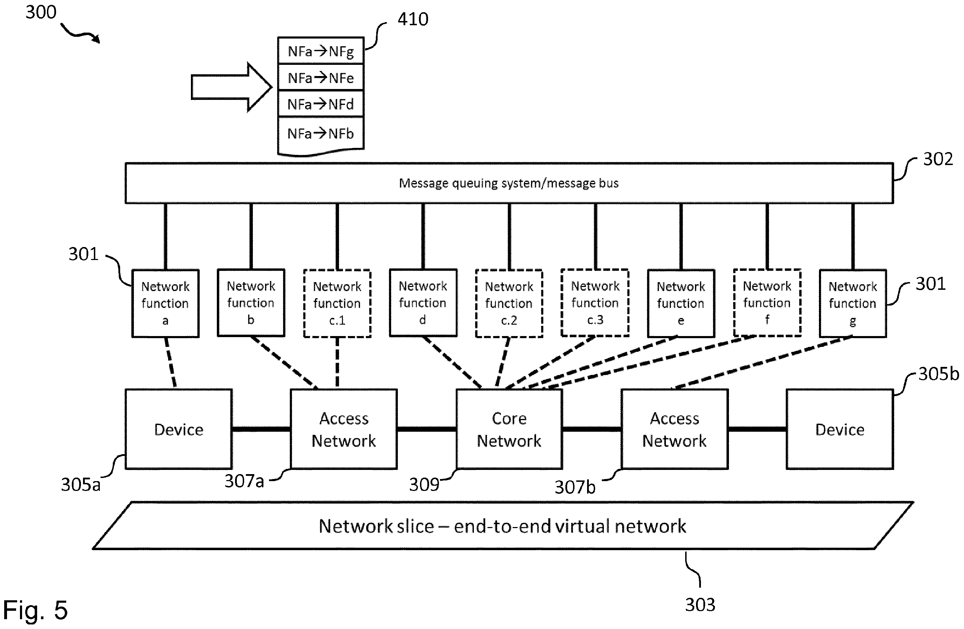

Thus, as already mentioned above, embodiments of the invention provide a kind of secure message bus 302 or message queuing system for allowing the plurality of logical network functions 301 in a secure fashion, which will be further illustrated in the context of figures 5, 6 and 7.

In an embodiment, the source network function 301 can keep on adding sub-messages to the message 410 until one or more certain predefined conditions are met. For instance, in an embodiment the source network function 301 can be configured to keep on aggregating sub-messages, including encrypted content data, until a predefined number of sub-messages is reached or the message 410 has reached a predefined size. Once this predefined number of sub-messages or this predefined size of the message 410 is reached, the source network function will send the message 410 to the other network functions 301, including the target network function(s). For instance, the source network function 301 can be configured to send the message 410 to the other network functions 301, including the target network function(s), once the message 410 comprises five sub-messages.

Alternatively or additionally, the source network function can be configured to add further sub-messages to the message 410 and send the message 410 to the other network functions 301, including the target network function(s), once a predefined time period has lapsed after the generation of the message 410. For instance, the source network function 301 can be configured to send the message 410 to the other network functions 301, including the target network function(s), 10 minutes after the message 410 has been generated.

Alternatively or additionally, the source network function can be configured to immediately send the message 410 to the other network functions 301, including the target network function(s), once at least of the sub-messages of the message 410 has been marked as a high-priority sub-message.

Figure 5 shows a schematic diagram illustrating a first example of a message exchange between the plurality of logical network functions 301 in the communication network 300 according to an embodiment. In this exemplary embodiment, the source network function "NFa" wants to provide respective content data to the target network functions "NFb", "NFd", "NFe", and "NFg". To this end, the source network function "NFa" distributes the message 410 including a respective sub-message for each of the target network functions "NFb", "NFd", "NFe", and "NFg". In other words, the source network function "NFa" uses the secure communication bus 302 for providing the respective content data to the target network functions "NFb", "NFd", "NFe", and "NFg". As described above, the respective sub-messages are encrypted so that only the addressed target network function will be able to decrypt and process the respective sub-messages, including the respective content data. Although also the other logical network functions, such as the network functions "NFc.1", "NFc.2", "NFc.3" and "NFf" in principle have access to the message 410 provided by the source network function "NFa", these other logical network functions cannot decrypt any of the sub-messages of the message 410, as indicated in figure 5. In this way, embodiments of the invention allow to exclude selected logical network functions, for instance, third party network functions, from the exchange of content data between the plurality of network functions 301 of the communication network 300.

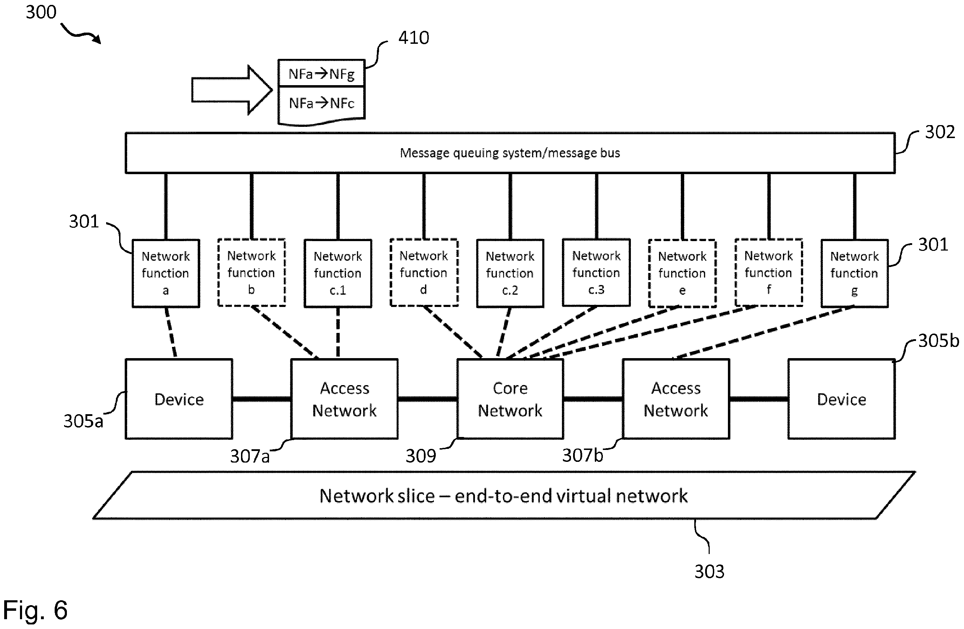

Figure 6 shows a schematic diagram illustrating a second example of a message exchange between the plurality of logical network functions 301 in the communication network 300 according to an embodiment. In this exemplary embodiment, the source network function "NFa" wants to provide respective content data to the target network functions "NFc.1", "NFc.2", "NFc.3", and "NFg", wherein the network functions "NFc.1", "NFc.2", "NFc.3" are different instances of the network function "NFc" and are to be provided with the same content data. In an embodiment, the network function "NFc" and its instances could be configured to provide AAA management services, mobility management services and the like. In an embodiment, the target network functions "NFc.1", "NFc.2", "NFc.3" are considered to belong to the same group of logical network functions, which does not include the further target network function "NFg". In this case, the source target function "NFa" can use as the second cryptographic key a public key of the group of network functions comprising the target network functions "NFc.1", "NFc.2", "NFc.3". As the corresponding private key is available to all the group members, including the target network functions "NFc.1", "NFc.2", "NFc.3", the first cryptographic key used for encrypting the content data and, thus, the encrypted content data can be decrypted by the respective target network functions "NFc.1", "NFc.2", "NFc.3". The content data for the target network function "NFg" will be encrypted in the same way as described for the exemplary embodiment shown in figure 5. Although also the other logical network functions, such as the network functions "NFb", "NFd", "NFe" and "NFf" in principle have access to the message 410 provided by the source network function "NFa", these other logical network functions cannot decrypt any of the sub-messages of the message 410, as indicated in figure 6.

Thus, in an embodiment, different instances of a network function can be grouped together to define a group of network functions. In an embodiment, a group of network functions can comprise different network functions. In an embodiment, a logical network function can belong to more than one group.

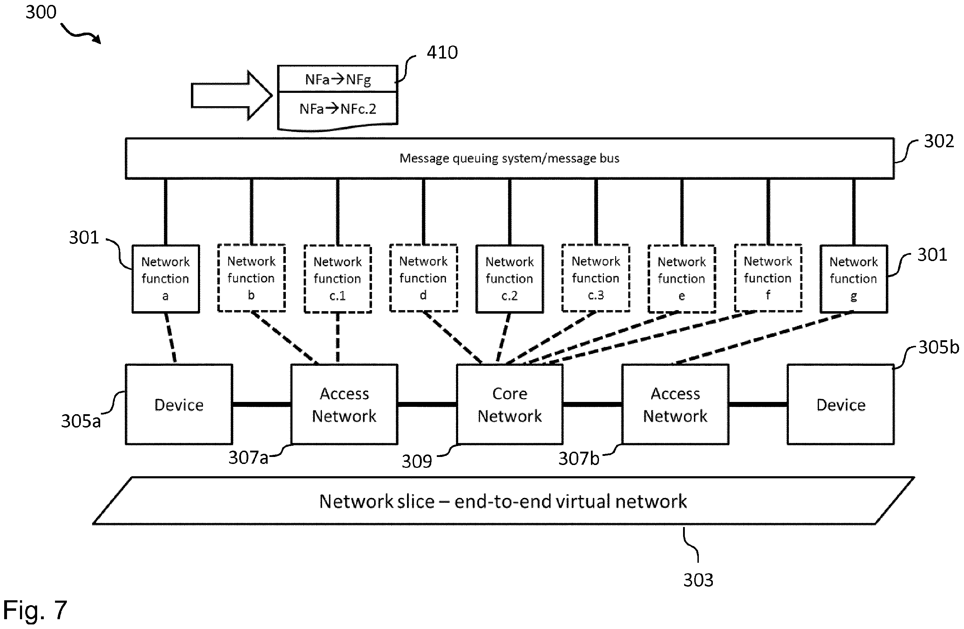

Figure 7 shows a schematic diagram illustrating a third example of a message exchange between the plurality of logical network functions 301 in the communication network 300 according to an embodiment. In this exemplary embodiment, the source network function "NFa" wants to provide respective content data to the target network function "NFg" and to a specific instance of the target network function "NFc", namely the target network function "NFc.2". In this case, the source target function "NFa" can use as the second cryptographic key a public key corresponding to a private key, which is only known to the target network function "NFc.2", but not to the other instances of the target network function "NFc", i.e. the network functions "NFc.1" and "NFc.3". The content data for the target network function "NFg" will be encrypted in the same way as described for the exemplary embodiment shown in figure 5. Although also the other logical network functions, such as the network functions "NFb", "NFc.1", "NFd", "NFc.3", "NFe" and "NFf" in principle have access to the message 410 provided by the source network function "NFa", these other logical network functions cannot decrypt any of the sub-messages of the message 410, as indicated in figure 7.

In an embodiment, the communication bus 302 provided by embodiments of the invention is configured to register new network functions and/or de-register existing network functions. In an embodiment, the communication bus 302 provided by embodiments of the invention is configured to forward messages from a source network function, such as the message 410, only to those logical network functions 301, which are registered with the communication bus 302.

As described above, embodiments of the invention can be based on a public-key infrastructure. In an embodiment, a target network function 301 can be associated with two asymmetric key pairs, namely a public key and a private key for the group the target network function 301 belongs to and a public key and a private key unique to the target network function 301.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A method (100) of distributing content data (401a, 401b) between network functions (301) in a communication network (300) comprising a plurality of network functions (301), wherein the plurality of network functions (301) are implemented in a network slice (303) of the communication network (300), wherein the method (100) comprises:
generating (101) a message (410) including content data (401a, 401b) for a target network function (301) of the plurality of network functions (301), wherein the message (410) comprises metadata (410a), and wherein the metadata (410a) provides information for associating the encrypted content data with the target network function (301), wherein the metadata (410a) is readable by the plurality of network functions (301);
encrypting (103) the content data (401a, 401b) of the message using a first cryptographic key (403a, 403b);
encrypting (105) the first cryptographic key (403a, 403b) using a second cryptographic key (405a, 405b), wherein the second cryptographic key (405a, 405b) is associated with the target network function (301);
attaching (107) the encrypted first cryptographic key to the message (410); and
sending (109) the message (401), including the encrypted content data and the encrypted first cryptographic key, to the plurality of network functions (301).

2. The method (100) of claim 1, wherein the second cryptographic key (405a, 405b) is associated with a group of network functions of the plurality of network functions (301), wherein the group of network functions comprises the target network function.

3. The method (100) of any one of the preceding claims, wherein the steps of encrypting (103) the content data (401a, 401b) of the message (410), encrypting (105) the first cryptographic key (403a, 403b) and attaching (107) the encrypted first cryptographic key are repeated for different content data (401a, 401b) of the message (410), wherein for each content data (401a, 401b) of the message (410) a different first cryptographic key (403a, 403b) and a different second cryptographic key (405a, 405b) is used.

4. The method (100) of any one of the preceding claims, wherein the step of sending (109) the message (410) is triggered, in response to at least one of the following conditions:
- the encrypted content data of the message (410) is larger than a predefined threshold value;
- a predefined time period has lapsed after the generation of the message (410);
- encrypted content data of the message (410) has been marked as high-priority content data.

5. The method (100) of any one of the preceding claims, wherein the first cryptographic key (403a, 403b) is a symmetric key and/or the second cryptographic key (405a, 405b) associated with the target network function (301) is a public cryptographic key (405a, 405b) of an asymmetric cryptographic key pair associated with the target network function (301).

6. A method (200) of obtaining content data (401a, 401b) by a target network function (301) in a communication network (300) comprising a plurality of network functions (301), wherein the plurality of network functions (301) are implemented in a network slice (303) of the communication network (300), wherein the method (200) comprises:
receiving (201) a message (410), including encrypted content data and an encrypted first cryptographic key associated with the encrypted content data, wherein the encrypted first cryptographic key has been encrypted using a second cryptographic key (405a, 405b) associated with the target network function (301);
extracting metadata (410a) from the received message (410) and identifying the encrypted content data of the received message (410) that is associated with the target network function (301) on the basis of the metadata (410a), wherein the metadata (410a) is readable by the plurality of network functions (301);
decrypting (203) the encrypted first cryptographic key using a third cryptographic key associated with the target network function (301); and
decrypting (205) the encrypted content data using the first cryptographic key (403a, 403b) for obtaining the content data (401a, 401b).

7. The method (200) of claim 6, wherein the third cryptographic key associated with the target network function (301) and the second cryptographic key (405a, 405b) associated with the target network function (301) are a private cryptographic key and a public cryptographic key (405a, 405b) of an asymmetric cryptographic key pair associated with the target network function (301).

8. The method (200) of claim 6 or 7, wherein the method (200) comprises the further step of sending an acknowledgment of receipt message to a source network function (301), which has sent the message (410).

9. The method (200) of any one of the claims 6 to 8, wherein the first cryptographic key (403a, 403b) is a symmetric key.

10. A communication network (300) comprising a plurality of network functions (301), wherein the plurality of network functions (301) are configured to distribute content data (401a, 401b) using the method (100) of any one of claims 1 to 5 and/or wherein the plurality of network functions (301) are configured to obtain content data (401a, 401b) using the method (200) of any one of claims 6 to 9, wherein the communication network (300) comprises a network slice (303) and wherein the plurality of network functions (301) are implemented in the network slice (303) of the communication network (300).

11. A computer program product comprising program code for performing the method (100) of any one of claims 1 to 5 and/or the method (200) of any one of claims 6 to 9 when executed on a computer.

## Patentansprüche

1. Verfahren (100) zum Verteilen von Inhaltsdaten (401a, 401b) zwischen Netzwerkfunktionen (301) in einem Kommunikationsnetzwerk (300), das eine Vielzahl von Netzwerkfunktionen (301) umfasst, wobei die Vielzahl von Netzwerkfunktionen (301) in einer Netzwerkscheibe (303) des Kommunikationsnetzwerks (300) implementiert werden, wobei das Verfahren (100) Folgendes umfasst:
Erzeugen (101) einer Nachricht (410), die Inhaltsdaten (401a, 401b) für eine Netzwerkzielfunktion (301) der Vielzahl von Netzwerkfunktionen (301) beinhaltet, wobei die Nachricht (410) Metadaten (410a) umfasst und wobei die Metadaten (410a) Informationen zum Verknüpfen der verschlüsselten Inhaltsdaten mit der Netzwerkzielfunktion (301) bereitstellen, wobei die Metadaten (410a) von der Vielzahl von Netzwerkfunktionen (301) lesbar sind;
Verschlüsseln (103) der Inhaltsdaten (401a, 401b) der Nachricht unter Verwendung eines ersten kryptographischen Schlüssels (403a, 403b);
Verschlüsseln (105) des ersten kryptographischen Schlüssels (403a, 403b) unter Verwendung eines zweiten kryptographischen Schlüssels (405a, 405b), wobei der zweite kryptographische Schlüssel (405a, 405b) mit der Netzwerkzielfunktion (301) verknüpft ist;
Anhängen (107) des verschlüsselten ersten kryptographischen Schlüssels an die Nachricht (410) und Senden (109) der Nachricht (401), die die verschlüsselten Inhaltsdaten und den verschlüsselten ersten kryptographischen Schlüssel beinhaltet, an die Vielzahl von Netzwerkfunktionen (301).

2. Verfahren (100) nach Anspruch 1, wobei der zweite kryptographische Schlüssel (405a, 405b) mit einer Gruppe von Netzwerkfunktionen der Vielzahl von Netzwerkfunktionen (301) verknüpft ist, wobei die Gruppe von Netzwerkfunktionen die Netzwerkzielfunktion umfasst.

3. Verfahren (100) nach einem der vorhergehenden Ansprüche, wobei die Schritte des Verschlüsselns (103) der Inhaltsdaten (401a, 401b) der Nachricht (410), des Verschlüsselns (105) des ersten kryptographischen Schlüssels (403a, 403b) und des Anhängens (107) des verschlüsselten ersten kryptographischen Schlüssels für verschiedene Inhaltsdaten (401a, 401b) der Nachricht (410) wiederholt werden, wobei für jede Inhaltsdaten (401a, 401b) der Nachricht (410) ein anderer erster kryptographischer Schlüssel (403a, 403b) und ein anderer zweiter kryptographischer Schlüssel (405a, 405b) verwendet wird.

4. Verfahren (100) nach einem der vorhergehenden Ansprüche, wobei der Schritt des Sendens (109) der Nachricht (410) in Reaktion auf mindestens eine der folgenden Bedingungen ausgelöst wird:
- die verschlüsselten Inhaltsdaten der Nachricht (410) sind größer als ein vordefinierter Schwellwert;
- nach der Erzeugung der Nachricht (410) ist eine vordefinierte Zeitperiode vergangen;
- verschlüsselte Inhaltsdaten der Nachricht (410) wurden als Inhaltsdaten hoher Priorität gekennzeichnet.

5. Verfahren (100) nach einem der vorhergehenden Ansprüche, wobei der erste kryptographische Schlüssel (403a, 403b) ein symmetrischer Schlüssel ist und/oder der zweite kryptographische Schlüssel (405a, 405b), der mit der Netzwerkzielfunktion (301) verknüpft ist, ein öffentlicher kryptographischer Schlüssel (405a, 405b) eines asymmetrischen kryptographischen Schlüsselpaares ist, das mit der Netzwerkzielfunktion (301) verknüpft ist.

6. Verfahren (200) zum Erhalten von Inhaltsdaten (401a, 401b) durch eine Netzwerkzielfunktion (301) in einem Kommunikationsnetzwerk (300), das eine Vielzahl von Netzwerkfunktionen (301) umfasst, wobei die Vielzahl von Netzwerkfunktionen (301) in einer Netzwerkscheibe (303) des Kommunikationsnetzwerks (300) implementiert werden, wobei das Verfahren (200) Folgendes umfasst:
Empfangen (201) einer Nachricht (410), die verschlüsselte Inhaltsdaten und einen verschlüsselten ersten kryptographischen Schlüssel, der mit den verschlüsselten Inhaltsdaten verknüpft ist, beinhaltet, wobei der verschlüsselte erste kryptographische Schlüssel unter Verwendung eines zweiten kryptographischen Schlüssels (405a, 405b), der mit der Netzwerkzielfunktion (301) verknüpft ist, verschlüsselt wurde;
Extrahieren von Metadaten (410a) aus der empfangenen Nachricht (410) und Identifizieren der verschlüsselten Inhaltsdaten der empfangenen Nachricht (410), die mit der Netzwerkzielfunktion (301) verknüpft sind, auf Basis der Metadaten (410a), wobei die Metadaten (410a) von der Vielzahl von Netzwerkfunktionen (301) lesbar sind;
Entschlüsseln (203) des verschlüsselten ersten kryptographischen Schlüssels unter Verwendung eines dritten kryptographischen Schlüssels, der mit der Netzwerkzielfunktion (301) verknüpft ist; und
Entschlüsseln (205) der verschlüsselten Inhaltsdaten unter Verwendung des ersten kryptographischen Schlüssels (403a, 403b), um die Inhaltsdaten (401a, 401b) zu erhalten.

7. Verfahren (200) nach Anspruch 6, wobei der dritte kryptographische Schlüssel, der mit der Netzwerkzielfunktion (301) verknüpft ist, und der zweite kryptographische Schlüssel (405a, 405b), der mit der Netzwerkzielfunktion (301) verknüpft ist, ein privater kryptographischer Schlüssel und ein öffentlicher kryptographischer Schlüssel (405a, 405b) eines asymmetrischen kryptographischen Schlüsselpaares sind, das mit der Netzwerkzielfunktion (301) verknüpft ist.

8. Verfahren (200) nach Anspruch 6 oder 7, wobei das Verfahren (200) den weiteren Schritt des Sendens einer Empfangsbestätigungsnachricht an eine Netzwerkquellfunktion (301), die die Nachricht (410) gesendet hat, umfasst.

9. Verfahren (200) nach einem der Ansprüche 6 bis 8, wobei der erste kryptographische Schlüssel (403a, 403b) ein symmetrischer Schlüssel ist.

10. Kommunikationsnetzwerk (300), das eine Vielzahl von Netzwerkfunktionen (301) umfasst, wobei die Vielzahl von Netzwerkfunktionen (301) dazu ausgelegt sind, unter Verwendung des Verfahrens (100) nach einem der Ansprüche 1 bis 5 Inhaltsdaten (401a, 401b) zu verteilen, und/oder wobei die Vielzahl von Netzwerkfunktionen (301) dazu ausgelegt sind, unter Verwendung des Verfahrens (200) nach einem der Ansprüche 6 bis 9 Inhaltsdaten (401a, 401b) zu erhalten, wobei das Kommunikationsnetzwerk (300) eine Netzwerkscheibe (303) umfasst und wobei die Vielzahl von Netzwerkfunktionen (301) in der Netzwerkscheibe (303) des Kommunikationsnetzwerks (300) implementiert werden.

11. Computerprogrammprodukt, das Programmcode zum Durchführen des Verfahrens (100) nach einem der Ansprüche 1 bis 5 und/oder des Verfahrens (200) nach einem der Ansprüche 6 bis 9, wenn er auf einem Computer ausgeführt wird, umfasst.

## Revendications

1. Procédé (100) de distribution de données de contenu (401a, 401b) entre des fonctions de réseau (301) dans un réseau de communication (300) comprenant une pluralité de fonctions de réseau (301), où la pluralité de fonctions de réseau (301) sont mises en oeuvre dans une tranche de réseau (303) du réseau de communication (300), le procédé (100) comprenant les étapes suivantes :
générer (101) un message (410) comprenant des données de contenu (401a, 401b) pour une fonction de réseau cible (301) de la pluralité de fonctions de réseau (301), où le message (410) comprend des métadonnées (410a), et où les métadonnées (410a) fournissent des informations pour associer les données de contenu chiffrées avec la fonction de réseau cible (301), où les métadonnées (410a) peuvent être lues par la pluralité de fonctions de réseau (301) ;
chiffrer (103) les données de contenu (401a, 401b) du message au moyen d'une première clé cryptographique (403a, 403b) ;
chiffrer (105) la première clé cryptographique (403a, 403b) au moyen d'une deuxième clé cryptographique (405a, 405b), où la deuxième clé cryptographique (405a, 405b) est associée à la fonction de réseau cible (301) ;
attacher (107) la première clé cryptographique chiffrée au message (410) ; et
envoyer (109) le message (401), comprenant les données de contenu chiffrées et la première clé cryptographique chiffrée, à la pluralité de fonctions de réseau (301).

2. Procédé (100) selon la revendication 1, dans lequel la deuxième clé cryptographique (405a, 405b) est associée à un groupe de fonctions de réseau de la pluralité de fonctions de réseau (301), où le groupe de fonctions de réseau comprend la fonction de réseau cible.

3. Procédé (100) selon l'une quelconque des revendications précédentes, dans lequel les étapes de chiffrement (103) des données de contenu (401a, 401b) du message (410), de chiffrement (105) de la première clé cryptographique (403a, 403b) et d'attachement (107) de la première clé cryptographique chiffrée sont répétées pour différentes données de contenu (401a, 401b) du message (410) où, pour chaque donnée de contenu (401a, 401b) du message (410), une première clé cryptographique différente (403a, 403b) et une deuxième clé cryptographique différente (405a, 405b) sont utilisées.

4. Procédé (100) selon l'une quelconque des revendications précédentes, dans lequel l'étape comprenant d'envoyer (109) le message (410) est déclenchée, en réponse à au moins une des conditions suivantes :
- les données de contenu chiffrées du message (410) sont supérieures à une valeur seuil prédéfinie ;
- un délai prédéfini s'est écoulé après la génération du message (410) ;
- des données de contenu chiffrées du message (410) ont été marquées comme données de contenu à priorité élevée.

5. Procédé (100) selon l'une quelconque des revendications précédentes, dans lequel la première clé cryptographique (403a, 403b) est une clé symétrique et/ou la deuxième clé cryptographique (405a, 405b) associée à la fonction de réseau cible (301) est une clé cryptographique publique (405a, 405b) d'une paire de clés cryptographiques asymétrique associée à la fonction de réseau cible (301).

6. Procédé (200) d'obtention de données de contenu (401a, 401b) par une fonction de réseau cible (301) dans un réseau de communication (300) comprenant une pluralité de fonctions de réseau (301), où la pluralité de fonctions de réseau (301) sont mises en oeuvre dans une tranche de réseau (303) du réseau de communication (300), le procédé (200) comprenant les étapes suivantes :
recevoir (201) un message (410) comprenant des données de contenu chiffrées et une première clé cryptographique chiffrée associée aux données de contenu chiffrées, où la première clé cryptographique chiffrée a été chiffrée en utilisant une deuxième clé cryptographique (405a, 405b) associée à la fonction de réseau cible (301) ;
extraire des métadonnées (410a) du message reçu (410) et identifier les données de contenu chiffrées du message reçu (410) qui sont associées à la fonction de réseau cible (301) sur la base des métadonnées (410a), où les métadonnées (410a) sont lisibles par la pluralité des fonctions de réseau (301) ;
déchiffrer (203) la première clé cryptographique chiffrée en utilisant une troisième clé cryptographique associée à la fonction de réseau cible (301) ; et
déchiffrer (205) les données de contenu chiffrées en utilisant la première clé cryptographique (403a, 403b) pour obtenir les données de contenu (401a, 401b).

7. Procédé (200) selon la revendication 6, dans lequel la troisième clé cryptographique associée à la fonction de réseau cible (301) et la deuxième clé cryptographique (405a, 405b) associée à la fonction de réseau cible (301) sont une clé cryptographique privée et une clé cryptographique publique (405a, 405b) d'une paire de clés cryptographiques asymétrique associée à la fonction de réseau cible (301).

8. Procédé (200) selon la revendication 6 ou la revendication 7, dans lequel le procédé (200) comprend l'étape supplémentaire comprenant d'envoyer un message d'accusé de réception à une fonction de réseau source (301), qui a envoyé le message (410).

9. Procédé (200) selon l'une quelconque des revendications 6 à 8, dans lequel la première clé cryptographique (403a, 403b) est une clé symétrique.

10. Réseau de communication (300) comprenant une pluralité de fonctions de réseau (301), dans lequel la pluralité de fonctions de réseau (301) sont configurées pour distribuer des données de contenu (401a, 401b) au moyen du procédé (100) de l'une quelconque des revendications 1 à 5 et/ou dans lequel la pluralité de fonctions de réseau (301) sont configurées pour obtenir des données de contenu (401a, 401b) au moyen du procédé (200) de l'une quelconque des revendications 6 à 9, où le réseau de communication (300) comprend une tranche de réseau (303) et où la pluralité de fonctions de réseau (301) sont mises en oeuvre dans la tranche de réseau (303) du réseau de communication (300).

11. Produit programme informatique comprenant un code de programme pour exécuter le procédé (100) de l'une quelconque des revendications 1 à 5 et/ou le procédé (200) de l'une quelconque des revendications 6 à 9 lorsqu'il est exécuté sur un ordinateur.
